# FASCICULE DE BREVET EUROPEEN

(11) **EP 1 965 543 B1**
(45) Date de publication et mention de la délivrance du brevet: **28.09.2011**
(21) Numéro de dépôt: 08101831.9
(22) Date de dépôt: 21.02.2008
(51) Int. Cl.: H04L 12/24

(54) **Dispositif d'optimisation du fonctionnement d'un réseau de communication par application automatique de paramètres de caractéristique d'objets stables à des objets instables**
Vorrichtung zur Funktionsoptimierung eines Kommunikationsnetzes durch automatische Anwendung von Eigenschaftsparametern stabiler Objekte auf instabile Objekte
Device for optimising the operation of a communication network by automatically applying characteristic parameters of stable objects to unstable objects

(30) Priorité: 27.02.2007 FR 0753518
(43) Date de publication de la demande: 03.09.2008
(73) Titulaire: Alcatel Lucent, 75008 Paris (FR)
(72) Inventeur: Brethereau, Alain, 78220 Viroflay (FR); Houllier, Jean-Roch, 91240 Saint-Michel sur Orge (FR); De Mathan, Béatrix, 75016 Paris (FR)
(74) Mandataire: El Manouni, Josiane

(56) Documents cités:
- EP-A- 1 091 522
- EP-A- 1 624 617
- US-A1- 2003 069 947

## Description

L'invention concerne les réseaux de communication, et plus particulièrement l'optimisation du fonctionnement de tels réseaux.

Tout type de réseau de communication est concerné par l'invention, qu'il soit fixe (ou filaire), comme par exemple un réseau fixe commuté (plus connus sous l'acronyme anglais POTS (pour « Plain Old Telephone Service ») et PSTN (pour « Public Switched Telephony Network »)) ou un réseau local filaire (ou LAN (« Local Area Network »), ou qu'il soit radio (ou sans fil), comme par exemple un réseau de téléphonie mobile ou cellulaire (GSM, GPRS/EDGE, UMTS ou CDMA2000, ainsi que toutes leurs variantes et tous leurs équivalents), ou un réseau local sans fil (standards WLAN (« Wireless Local Area Network » - IEEE 802.11, Wi-Fi, ETSI HiperLAN/2), Bluetooth (IEEE 802.15), WiMAX (IEEE 802.16, ETSI HiperMAN) et Zigbee), ou encore un réseau satellitaire.

Comme le sait l'homme de l'art, les opérateurs des réseaux de communication sont contraints d'optimiser fréquemment le fonctionnement et/ou la configuration de leurs réseaux compte tenu de leurs coûts de déploiement et de fonctionnement élevés et de la concurrence, notamment en matière de services offerts aux abonnés. Une telle optimisation est une tâche difficile, notamment du fait de la coexistence de réseaux ou de portions de réseau de standards différents (par exemple et non limitativement GSM, GPRS, EDGE, UMTS, 3G LTE, WiMAX, WiFi et analogues).

Cela nécessite en effet non seulement le suivi de la qualité de service (ou « QoS ») dans chaque cellule d'un réseau, mais également l'analyse des causes à l'origine des problèmes de qualité de service. De telles analyses sont complexes du fait que de nombreux facteurs internes et externes au réseau (comme par exemple la géographie et le géomarketing) peuvent influer sur cette qualité de service tout comme d'ailleurs sur le trafic, et donc que de très nombreuses données de fonctionnement et/ou de configuration du réseau doivent être prises en considération. Ces données, dites d'analyse, représentent par exemple les trafics passant par les éléments (ou équipements ou encore objets) de réseau. Mais, il peut également s'agir de paramètres de réseau ou d'indicateurs, par exemple de qualité de service (QoS).

Certains outils (ou systèmes) d'optimisation de réseau, comme par exemple ceux appelés RNO® (pour « Radio Network Optimization ») et NPO® (« Network Performance Optimization »), développés par la société ALCATEL pour les réseaux radio cellulaires, permettent à l'homme de l'art de gérer de nombreuses données d'analyse. Il est rappelé que les outils RNO® et NPO® permettent de suivre l'évolution de la qualité de service (ou QoS) au sein de certains éléments de réseau, comme par exemple des cellules, de diagnostiquer des causes de problèmes, notamment de qualité de service, et de proposer des solutions pour résoudre ces problèmes.

Mais, ces outils seraient plus faciles et plus rapides à utiliser s'ils nécessitaient moins d'interventions d'optimisation (manuelles) par un opérateur et des durées moins importantes d'interventions pour améliorer le réseau.

La demande de brevet européen EP 1 624 617 décrit un système pour la configuration radio des objets d'un réseau cellulaire, où l'administrateur du réseau est présenté avec d'information sur les objets du réseau qui lui permet d'identifier des groupes d'objets et des objets de référence pour reproduire la configuration de l'objet de référence sur d'autres objets du groupe.

L'invention a donc pour but d'améliorer la situation, et notamment de permettre une automatisation de l'optimisation (de préférence sous contrôle) d'une partie au moins d'un réseau de communication (éventuellement radio).

Elle propose à cet effet un dispositif dédié à l'optimisation du fonctionnement (et/ou de la configuration) d'une partie au moins d'un réseau de communication comprenant des objets disposant d'une caractéristique définie par au moins un paramètre lui-même défini par un ensemble d'au moins une valeur.

On entend ici par « objet » tout élément de réseau ou de topologie de réseau (par exemple une station de base (Node B, BS ou BTS), une cellule ou une adjacence). Par ailleurs, on entend ici par « caractéristique d'un objet » la configuration de cet objet et tout ce qui peut avoir un impact sur lui (et notamment le type de trafic, le type de zone couverte, et analogues).

Ce dispositif d'optimisation se caractérise par le fait qu'il comprend des moyens de traitement chargés, en cas d'identification d'un objet du réseau (possédant une caractéristique définie par au moins un paramètre à adapter) :
- de déterminer (dans des moyens de mémorisation) au moins un objet stable possédant une caractéristique sensiblement similaire à celle de l'objet identifié et définie par au moins un paramètre identique au paramètre à adapter et défini par un ensemble de valeur(s),
- d'ordonner l'application de cet ensemble de valeur(s) au paramètre à adapter dans l'objet identifié, et
- d'analyser pendant une durée choisie l'influence de l'adaptation de paramètre sur le fonctionnement de l'objet identifié, afin de ne remplacer dans les moyens de mémorisation l'ancienne définition de la caractéristique de cet objet identifié par la définition de caractéristique adaptée qu'en cas d'amélioration de son fonctionnement induite par l'adaptation de ce paramètre.

Le dispositif selon l'invention peut comporter d'autres caractéristiques qui peuvent être prises séparément ou en combinaison, et notamment :
- il peut comprendre des moyens d'identification chargés d'analyser le fonctionnement du réseau afin d'identifier des objets dont une caractéristique est définie par au moins un paramètre à adapter ;
   ➢ les moyens d'identification peuvent être chargés d'identifier les objets en fonction d'alarmes et/ou d'indicateurs de qualité de service et/ou d'informations représentatives d'instabilités d'objets délivré(e)s par des équipements du réseau ;
- il peut comprendre les moyens de mémorisation des définitions des caractéristiques d'objet ;
- ses moyens de traitement peuvent être chargés de déterminer dans les moyens de mémorisation des objets stables dont les caractéristiques sont définies par des paramètres qui appartiennent à une liste choisie de paramètres et appartenant à une liste choisie d'objets et/ou ayant un type appartenant à une liste choisie de types et/ou ayant au moins une caractéristique physique ou géographique appartenant à une liste choisie de caractéristiques ;
- ses moyens de traitement peuvent être chargés de déterminer des caractéristiques adaptées pour des objets identifiés qui requièrent une adaptation de caractéristique depuis plus d'une durée choisie ;
- ses moyens de traitement peuvent éventuellement requérir l'autorisation du gestionnaire du réseau avant d'appliquer un ensemble de valeur(s) à un paramètre de caractéristique d'un objet identifié ;
- ses moyens de traitement peuvent éventuellement requérir l'autorisation du gestionnaire du réseau avant de remplacer dans les moyens de mémorisation l'ancienne définition de caractéristique d'un objet identifié par une définition de caractéristique adaptée ayant induit une amélioration de son fonctionnement ;
- ses moyens de traitement peuvent être chargés, en l'absence de réception d'une réponse pendant une durée choisie démarrée consécutivement à une requête d'autorisation, d'appliquer un nouvel ensemble de valeur(s) ou de remplacer une ancienne définition de caractéristique ;
- ses moyens de traitement peuvent être chargés de signaler certaines au moins des actions effectuées à au moins un équipement ou élément de réseau en vue d'un contrôle et/ou d'une analyse d'action ;
- il peut être au moins en partie paramétrable de manière à être au moins partiellement débrayable et/ou à agir de façon limitée dans le temps et/ou à agir de façon limitée dans certaines au moins des parties du réseau et/ou à effectuer des fonctions choisies et/ou à n'accepter que certains états choisis ;
- ses moyens de traitement peuvent être chargés de stocker dans des moyens de mémorisation auxiliaires chaque adaptation de paramètre de caractéristique d'un objet identifié. Dans ce cas, il peut éventuellement comprendre des moyens d'analyse chargés d'analyser ces adaptations stockées dans les moyens de mémorisation auxiliaires afin d'effectuer des corrélations de problèmes.

L'invention propose également un équipement de gestion de réseau équipé d'un dispositif d'optimisation du type de celui présenté ci-avant.

L'invention est particulièrement bien adaptée, bien que de façon non exclusive, aux réseaux de communication radio (ou mobile ou cellulaire ou satellitaire ou plus généralement sans fil). D'une manière générale, l'invention concerne tout réseau de communication comportant de nombreux objets ayant des paramètres relativement difficiles à configurer.

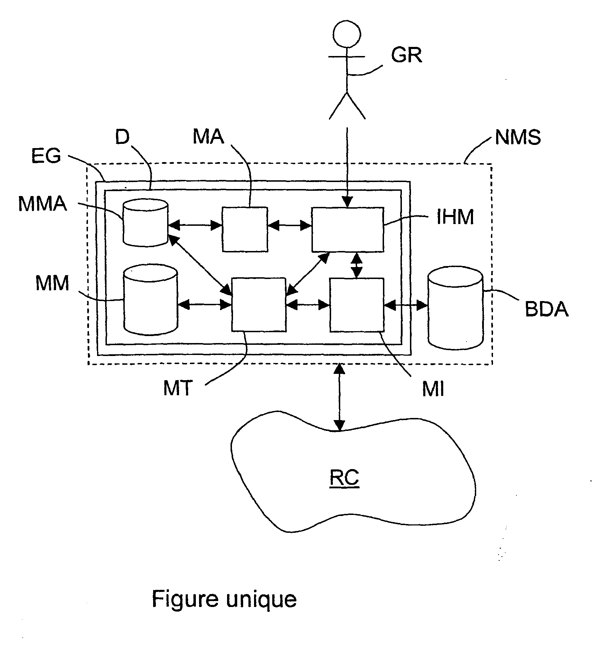

D'autres caractéristiques et avantages de l'invention apparaîtront à l'examen de la description détaillée ci-après, et du dessin annexé, sur lequel l'unique figure illustre de façon très schématique un système de gestion de réseau équipé d'un exemple de réalisation d'un dispositif d'optimisation selon l'invention. Le dessin annexé pourra non seulement servir à compléter l'invention, mais aussi contribuer à sa définition, le cas échéant.

L'invention a pour objet de permettre la réduction du nombre d'interventions d'optimisation (manuelles) par un opérateur de réseau de communication et des durées d'interventions nécessaires à l'amélioration d'une partie au moins dudit réseau de communication, grâce à une automatisation de l'optimisation au moins locale et de préférence contrôlée.

Dans ce qui suit, on considère à titre d'exemple non limitatif que le réseau de communication est un réseau radio cellulaire (ou mobile), comme par exemple un réseau GSM, ou GPRS/EDGE, ou UMTS, ou encore CDMA2000. Par conséquent, les ressources sont ici des canaux radio. Mais, l'invention n'est pas limitée à ce type de réseau. Elle concerne en effet tout type de réseau de communication, et notamment les réseaux fixes commutés (POTS ou PSTN), les réseaux locaux filaires (LAN) ou sans fil (standards WLAN («Wireless Local Area Network» - IEEE 802.11, Wi-Fi, ETSI HiperLAN/2), Bluetooth (IEEE 802.15), WiMAX (IEEE 802.16, ETSI HiperMAN) et Zigbee), ou les réseaux satellitaires, ou encore les réseaux multi-standards.

Par ailleurs, on entend ici par « données d'analyse » des données de trafic, ou des paramètres de réseau, ou encore des indicateurs, par exemple de qualité de service (QoS). De plus, on entend ici par « données de trafic » des valeurs (ou ensembles de valeur(s)) de paramètre(s) ou d'indicateur(s) pouvant être mesuré(e)s ou estimé(e)s par un système de gestion de réseau ou NMS (pour « Network Management System »).

II est rappelé qu'un réseau radio cellulaire RC peut être schématiquement résumé à un réseau de commutation (ou « Core Network ») couplé à un réseau d'accès radio (appelé UTRAN dans le cas d'un réseau UMTS et BSS dans le cas d'un réseau GSM), lui-même raccordé à un système de gestion de réseau NMS.

Le réseau RC comporte des éléments (ou équipements) de réseau. On entend ici par « élément (ou équipement) de réseau » tout constituant (physique et/ou logique) d'un réseau par lequel passent des trafics définis localement par des valeurs de paramètre(s) ou d'indicateur(s). Il pourra donc s'agir, par exemple, d'une cellule dans laquelle des terminaux mobiles peuvent établir ou poursuivre des communications, ou d'un équipement de réseau, tel qu'un routeur, une station de base (Node B dans le cas d'un réseau UMTS et BTS dans le cas d'un réseau GSM), ou un contrôleur de réseau radio (RNC dans le cas d'un réseau UMTS et BSC dans le cas d'un réseau GSM). Il est rappelé que les stations de base (Node Bs ou BTSs) et les contrôleurs de réseau radio (RNCs ou BSCs) font partie du réseau d'accès radio et sont raccordés entre eux ainsi qu'à un gestionnaire de réseau d'accès.

Certains au moins des éléments (ou équipements) de réseau mentionnés ci-dessus constituent des objets (de réseau). C'est notamment le cas des stations de base (Node Bs et BTSs), des contrôleurs de réseau radio (RNCs et BSCs) et des cellules. On notera que les objets peuvent être des éléments de réseau ou bien des éléments de topologie de réseau comme par exemple des adjacences.

L'invention propose d'équiper un réseau de communication (ici mobile) RC, comprenant des objets qui disposent chacun d'une caractéristique définie par au moins un paramètre (ou donnée d'analyse) lui-même (elle-même) défini(e) ou constitué(e) par un ensemble d'au moins une valeur (éventuellement numérique), d'au moins un dispositif D chargé d'optimiser le fonctionnement (et/ou la configuration) de l'une au moins de ses parties.

Comme cela est schématiquement et fonctionnellement illustré à titre d'exemple non limitatif sur l'unique figure, un dispositif d'optimisation D peut faire partie d'un équipement de gestion EG (tel qu'un ordinateur ou une station de travail) chargé de gérer au moins partiellement le fonctionnement du réseau. Comme illustré, cet équipement de gestion EG peut lui-même faire partie du système de gestion de réseau NMS. Dans une variante, le dispositif d'optimisation D peut constituer à lui seul un équipement de gestion EG pouvant faire partie du ou être couplé au système de gestion de réseau NMS. Ainsi, un dispositif d'optimisation D peut faire partie d'un ou constituer un outil d'optimisation de réseau, par exemple de type RNO® ou NPO®.

Dans l'exemple mentionné ci-dessus, le dispositif D selon l'invention est destiné agir au niveau de plusieurs objets du réseau mobile. Mais, un réseau de communication peut comporter plusieurs dispositifs D selon l'invention. Ainsi, des dispositifs D peuvent être implantés dans des objets comme par exemple des cellules, des stations de base ou des contrôleurs de réseau radio.

Par ailleurs, dans l'exemple ici décrit, le dispositif D selon l'invention est centralisé, c'est-à-dire entièrement implanté dans un seul équipement. Mais, cela n'est pas obligatoire. On peut en effet envisager qu'il soit réparti dans plusieurs équipements ou éléments d'un réseau de communication, comme par exemple (et non limitativement) dans des cellules, des contrôleurs de réseau radio, le centre d'exploitation et de gestion (ou OMC (pur « Opération and Management centre »)) et un outil d'optimisation de réseau (de type RNO® ou NPO®, par exemple).

Un dispositif d'optimisation D selon l'invention comprend au moins un module de traitement MT (éventuellement réparti sur plusieurs éléments ou équipements). Ce dernier est chargé d'assurer au moins trois fonctions principales consécutivement à l'identification d'un objet du réseau RC dont une caractéristique est définie par au moins un paramètre devant être adapté.

Dans ce qui suit, on appelle « objet instable » un objet possédant une caractéristique dont l'un au moins des paramètres doit être adapté en raison d'un dysfonctionnement ou d'un problème détecté, de préférence depuis une durée supérieure à un seuil choisi, comme par exemple une mauvaise qualité de service (QoS) ou une QoS inférieure à ce qui est souhaité, et qui le concerne personnellement ou qui le concerne ainsi que d'autre(s) élément(s) de trafic ou élément(s) de réseau.

De même, dans ce qui suit, on appelle « objet stable » un objet au niveau duquel aucun dysfonctionnement ou problème n'a été détecté (y compris pour ce qui concerne la QoS qui correspond à ce qui est attendu), de préférence depuis une durée supérieure à un seuil choisi.

Les définitions des caractéristiques des objets du réseau RC sont stockées dans des moyens de mémorisation MM qui peuvent se présenter sous n'importe quelle forme, et notamment sous la forme d'une mémoire ou d'une base de données. Par ailleurs, et comme illustré sur l'unique figure, les moyens de mémorisation MM peuvent faire partie d'un dispositif d'optimisation D. Mais cela n'est pas obligatoire. Ils peuvent en effet faire partie d'un équipement de gestion dans lequel est éventuellement implanté un dispositif d'optimisation D, ou bien dans une partie du système de gestion de réseau NMS, l'important étant que leur contenu soit accessible audit dispositif d'optimisation D.

On notera qu'un dispositif d'optimisation D peut éventuellement comprendre un module d'identification MI chargé d'analyser le fonctionnement du réseau RC dans le but d'identifier des objets dont une caractéristique est définie par au moins un paramètre devant être adapté.

Ce type d'analyse peut par exemple se faire en recherchant (identifiant) les objets instables en fonction d'alarmes et/ou d'indicateurs de qualité de service et/ou d'informations représentatives d'instabilités d'objets qui sont délivré(e)s par des équipements du réseau et qui sont généralement stocké(e)s dans une base de données d'analyse BDA du système de gestion de réseau NMS.

Dans une variante, un dispositif d'optimisation D peut directement recevoir du gestionnaire GR du réseau RC, par exemple via une interface homme/machine IHM, ou bien du système de gestion de réseau NMS (ou de l'OMC), la désignation d'un objet instable identifié et la désignation d'au moins un paramètre de caractéristique à adapter pour cet objet instable identifié, ainsi qu'éventuellement la définition de la caractéristique dudit objet instable identifié.

L'identification des objets instables peut se faire par tout moyen, et notamment par certains éléments ou équipements de réseau, comme par exemple des cellules, des stations de base ou des contrôleurs de réseau radio, ou par des outils d'administration et/ou d'optimisation (OMC, RNO® ou NPO®).

On notera que l'identification d'un objet instable dont une caractéristique peut être modifiée résulte initialement d'un problème détecté au sein du réseau, puis de la détermination, d'une part, du ou des paramètres de caractéristique qui sont susceptibles de résoudre ce problème s'il(s) est (sont) modifié(s), et d'autre part, d'un objet qui est concerné par le problème détecté, et enfin de la vérification que le ou les paramètres de caractéristique déterminés sont effectivement modifiables pour l'objet instable déterminé.

La première fonction du module de traitement MT consiste à déterminer, parmi les définitions de caractéristique d'objet qui sont stockées dans les moyens de mémorisation MM, au moins une définition de caractéristique d'un objet stable qui est sensiblement similaire à celle d'un objet instable identifié. On entend ici par « caractéristique sensiblement similaire » une caractéristique qui est définie par un ou plusieurs paramètres dont l'un au moins est identique à un paramètre de caractéristique devant être adapté dans un objet instable identifié. On notera que dans certains cas, un objet instable peut posséder exactement la même caractéristique qu'un objet stable, et donc des paramètres de caractéristique identiques définis pour l'un au moins d'entre eux par des ensembles de valeur(s) différents.

Dans l'exemple non limitatif illustré, le module de traitement MT procède à la détermination d'un objet instable identifié en comparant la définition de sa caractéristique à celles qui sont stockées dans les moyens de mémorisation MM et qui concernent des objets stables. On notera que l'on peut stocker dans les moyens de mémorisation MM soit seulement les définitions de caractéristique des objets stables, soit les définitions de caractéristique des objets stables et instables (dans ce cas, on peut éventuellement envisager que l'une des deux catégories soit différenciée par un marqueur dédié).

L'objet stable qui présente la caractéristique la plus proche de celle de l'objet instable identifié (et au moins le même paramètre que celui devant être adapté pour cet objet instable identifié) est celui qui est alors choisi. La caractéristique la plus proche d'une caractéristique stable est celle qui présente le plus grand nombre de paramètres identiques à ceux de cette caractéristique stable.

Une fois que le module de traitement MT a déterminé l'objet stable qui présente la caractéristique la plus proche de celle de l'objet instable identifié, il stocke l'ensemble de valeur(s) du paramètre de cette caractéristique qui est identique au paramètre à adapter pour cet objet instable identifié.

On notera que le module de traitement MT peut être éventuellement agencé de manière à ne procéder à la détermination (dans les moyens de mémorisation MM) que d'objets stables dont les caractéristiques sont définies par des paramètres faisant partie d'une liste choisie (prédéfinie) de paramètres et qui appartiennent à une liste choisie d'objets et/ou qui ont un type qui appartient à une liste choisie de types (comme par exemple le type station de base ou contrôleur de réseau radio ou encore cellule) et/ou qui ont au moins une caractéristique physique ou géographique qui appartient à une liste choisie de caractéristiques( comme par exemple un type de trafic, une population couverte (par exemple une population fréquentant une zone commerciale), une même progression de problème(s)).

Ces listes sont définies à l'avance par le gestionnaire GR du réseau RC et transmises au dispositif d'optimisation D via l'interface homme/machine IHM afin d'être stockées dans une mémoire locale (par exemple du module de traitement MT). Ainsi, la détermination peut être encadrée (et donc sécurisée) par un jeu d'une ou plusieurs règles dans le but de limiter les risques d'adaptation de caractéristique d'objets instables avec des ensembles de valeur(s) de paramètres de caractéristique d'objet stables très différents.

On notera également que le module de traitement MT peut être éventuellement agencé de manière à ne déterminer des caractéristiques adaptées que pour des objets instables identifiés qui requièrent une adaptation de caractéristique depuis une durée qui est supérieure à une durée seuil choisie. Cette variante est destinée à éviter d'adapter la caractéristique d'un objet dès qu'il fait l'objet d'une instabilité qui peut s'avérer momentanée. Il est important de noter que la durée d'instabilité dépend de plusieurs variables, comme par exemple le type de problème à traiter (et donc le type de solution) et/ou la position du dispositif D et/ou la position des moyens de contrôle des objets et/ou le type du réseau. Par exemple, si un contrôle repose sur des compteurs à l'heure, la durée d'instabilité devra être au minimum égale à une heure pour que l'on décide d'effectuer une adaptation. En revanche, si un contrôle repose sur une alarme, la durée d'instabilité minimale pourra être égale à quelques secondes.

On notera également que le degré de similitude requis entre les caractéristiques d'objets stable et instable peut être éventuellement adaptable. On comprendra que plus le degré de similitude avec un objet identifié ayant un problème est élevé, plus l'adaptation pourra être rapide, mais moins elle sera fine (plus la probabilité d'effectuer la bonne correction est faible car le nombre d'objets disponibles pour trouver des caractéristique proche est faible). Ce cas correspond par exemple à une situation dans laquelle on compare une cellule instable qui est rattachée à un contrôleur de réseau radio à des cellules stables qui sont rattachées à ce même contrôleur de réseau radio.

En revanche, plus le degré de similitude avec un objet ayant un problème est faible, moins l'adaptation pourra être rapide, mais plus elle sera fine (plus la probabilité d'effectuer la bonne correction est faible car le nombre d'objets disponibles pour trouver des caractéristique proche est élevé, notamment grâce à l'utilisation de techniques (ou outils (comme par exemple celui appelé RNO®)) sophistiqué(e)s de détermination de similitudes inter-objets). Ce cas correspond par exemple à une situation dans laquelle on compare une cellule instable, qui est rattachée à un contrôleur de réseau radio d'un réseau donné, à des cellules stables qui sont rattachées à tous les contrôleurs de réseau radio de ce même réseau radio.

On notera que dans tous les cas il est préférable de mettre en oeuvre des règles de sécurité drastiques.

La deuxième fonction du module de traitement MT consiste à ordonner l'application de l'ensemble de valeur(s) qu'il vient de déterminer et stocker au paramètre à adapter dans l'objet instable identifié. L'objectif de l'invention est en effet de tenter d'appliquer à un objet instable une partie au moins de la caractéristique d'un objet stable similaire afin de tenter de le rendre stable.

L'ordre d'application est par exemple transmis par le dispositif D au système de gestion de réseau NMS qui est en charge de la configuration des objets du réseau RC au moyen des ensembles de valeur(s) des paramètres qui définissent leurs caractéristiques respectives.

On notera que le module de traitement MT peut éventuellement être agencé de manière à ne pouvoir ordonner l'application d'un ensemble de valeur(s) à un paramètre de caractéristique d'un objet instable identifié qu'après en avoir reçu l'autorisation du gestionnaire GR du réseau RC. A cet effet, lorsque le module de traitement MT souhaite essayer une caractéristique adaptée, il ordonne à son dispositif D de générer un message décrivant l'adaptation envisagée à destination du gestionnaire GR du réseau RC. Ce message est par exemple affiché sur un écran de gestion au moyen de l'interface homme/machine IHM du dispositif D. Par exemple, si le gestionnaire GR du réseau RC adresse un message d'autorisation au dispositif D dans un intervalle de temps choisi, ou bien si le dispositif D ne reçoit pas de réponse pendant ledit intervalle de temps choisi, alors le module de traitement MT génère son ordre d'application à destination du système de gestion de réseau NMS. En revanche, si le gestionnaire GR du réseau RC adresse au dispositif D un message d'interdiction d'adaptation dans l'intervalle de temps choisi, alors le module de traitement MT essaye de déterminer une nouvelle adaptation de paramètre.

La troisième fonction du module de traitement MT consiste à analyser pendant une durée choisie l'influence que l'adaptation de paramètre a sur le fonctionnement de l'objet instable identifié. En d'autres termes, le module de traitement MT est chargé de déterminer si une adaptation de caractéristique permet de rendre stable pendant une durée choisie l'objet concerné.

De nouveau, la durée d'analyse dépend de plusieurs variables, comme par exemple le type de problème à traiter (et donc le type de solution) et/ou la position du dispositif D et/ou la position des moyens de contrôle des objets et/ou le type du réseau.

Pour ce faire, il peut par exemple interroger la base de données d'analyse BDA du système de gestion de réseau NMS, soit périodiquement, soit après une durée égale à ladite durée choisie augmentée d'une marge choisie (fonction du temps nécessaire à l'obtention des données d'analyse relatives à l'objet instable identifié). On notera que le fait d'effectuer des mesures « au fil de l'eau » peut augmenter l'efficacité et permettre une détection très proche de l'objet (voire même sur l'objet).

Deux cas peuvent alors se présenter. Si l'adaptation de la caractéristique de l'objet instable identifié n'a pas permis d'améliorer significativement le fonctionnement de ce dernier, et donc que son instabilité persiste, alors le module de traitement MT décide de conserver la définition de son ancienne caractéristique (avant la tentative d'adaptation). Par conséquent, il ne modifie pas le contenu des moyens de mémorisation MM et adresse un nouvel ordre au système de gestion de réseau NMS pour lui demander de réappliquer à l'objet instable identifié son ancienne caractéristique.

Si l'adaptation de la caractéristique de l'objet instable identifié a permis d'améliorer significativement le fonctionnement de ce dernier, voire même de supprimer son instabilité, alors le module de traitement MT décide d'entériner sa nouvelle caractéristique adaptée. Par conséquent, il remplace dans les moyens de mémorisation MM l'ancienne caractéristique instable par la nouvelle caractéristique adaptée de l'objet instable identifié.

On notera que le module de traitement MT peut éventuellement être agencé de manière à ne pouvoir entériner une nouvelle caractéristique adaptée d'un objet instable identifié qu'après en avoir reçu l'autorisation du gestionnaire GR du réseau RC. A cet effet, lorsque le module de traitement MT souhaite procéder à un remplacement de caractéristique dans les moyens de mémorisation MM, il ordonne à son dispositif D de générer un message décrivant l'adaptation ayant induit une amélioration de fonctionnement d'un objet instable identifié à destination du gestionnaire GR du réseau RC. Ce message est par exemple affiché sur un écran de gestion au moyen de l'interface homme/machine IHM du dispositif D. Par exemple, si le gestionnaire GR du réseau RC adresse un message d'autorisation de remplacement au dispositif D dans un intervalle de temps choisi, ou bien si le dispositif D ne reçoit pas de réponse pendant ledit intervalle de temps choisi, alors le module de traitement MT procède au remplacement de caractéristique dans les moyens de mémorisation MM. En revanche, si le gestionnaire GR du réseau RC adresse au dispositif D un message d'interdiction de remplacement dans l'intervalle de temps choisi, alors le module de traitement MT peut éventuellement essayer de déterminer une nouvelle adaptation de paramètre.

On notera également que le module de traitement MT peut éventuellement être agencé de manière à stocker dans des moyens de mémorisation auxiliaires MMA chaque adaptation de paramètre de caractéristique d'un objet instable identifié qu'il a définitivement entérinée (et donc enregistrée dans les moyens de mémorisation MM).

Ces moyens de mémorisation auxiliaires MMA peuvent se présenter sous n'importe quelle forme, et notamment sous la forme d'une mémoire ou d'une base de données. Ils peuvent également et éventuellement faire partie des moyens de mémorisation MM. Par ailleurs, et comme illustré sur l'unique figure, les moyens de mémorisation auxiliaires MMA peuvent faire partie du dispositif d'optimisation D. Mais cela n'est pas obligatoire. Ils peuvent en effet faire partie d'un équipement de gestion dans lequel est éventuellement implantée une partie au moins du dispositif d'optimisation D, ou dans une partie du système de gestion de réseau NMS, ou dans l'OMC, ou encore dans plusieurs équipements ou éléments de réseau ou de trafic.

On notera que le dispositif d'optimisation D peut éventuellement comprendre un module d'analyse MA chargé d'analyser les adaptations de paramètre de caractéristique qui sont stockées dans les moyens de mémorisation auxiliaires MMA. Ainsi, ils peuvent effectuer des corrélations de problèmes et proposer des solutions pour résoudre ces problèmes corrélés.

Dans ce qui précède on a décrit un exemple de mise en oeuvre de l'invention dans lequel le dispositif d'optimisation D ne procédait qu'à une seule adaptation de paramètre de caractéristique à chaque fois. Mais, le dispositif d'optimisation D peut également procéder à l'adaptation de plusieurs (au moins deux) paramètres de caractéristique si nécessaire, en particulier lorsque ces paramètres de caractéristique sont corrélés.

Un dispositif d'optimisation D selon l'invention, et notamment son module de traitement MT (éventuellement réparti), ses éventuels module d'identification MI et module d'analyse MA, et ses éventuels moyens de mémorisation MM et moyens de mémorisation auxiliaires MMA, peuvent être réalisés sous la forme de modules logiciels (ou informatiques), de circuits électroniques, ou d'une combinaison de circuits et de logiciels.

On notera de nouveau que dans l'exemple mentionné ci-dessus, le dispositif D selon l'invention est de type centralisé, et donc destiné à agir au niveau de plusieurs objets du réseau mobile. Mais, un réseau de communication peut comporter plusieurs dispositifs D selon l'invention distribués (par exemple dans des cellules, des stations de base (BTS, Node B ou BS) ou des contrôleurs de réseau radio (BSC, RNC ou WAC)).

Par ailleurs, un dispositif D selon l'invention peut être réparti dans plusieurs équipements ou éléments d'un réseau de communication. On notera que les moyens de traitement MT d'un dispositif D peuvent être eux-mêmes répartis dans plusieurs équipements ou éléments d'un réseau de communication.

A titre d'exemple illustratif et non limitatif, le dispositif D peut être réparti dans des cellules, des contrôleurs de réseau radio, le centre d'exploitation et de gestion (ou OMC) et un outil d'optimisation de réseau (de type RNO® ou NPO®, par exemple). Dans ce cas, on peut par exemple prévoir la répartition suivante des fonctions entre les différentes parties d'un même dispositif D.

Par exemple, une cellule peut détecter un problème, puis en informer la partie du dispositif D qui s'occupe d'elle, et demander à cette dernière d'adapter l'un au moins des paramètres de sa caractéristique.

La partie du dispositif D, qui est implantée dans le contrôleur de réseau radio auquel est rattachée cette cellule, peut alors être informée de la demande d'adaptation par la partie qui s'occupe de la cellule. Elle vérifie alors si l'adaptation peut être effectuée pour cette cellule, compte tenu du type de problème détecté et de la période actuelle considérée. Puis, elle avertit l'OMC. Elle recherche alors dans des moyens de mémorisation locaux s'il existe parmi les cellules qui sont rattachées à son contrôleur de réseau radio une cellule stable présentant une caractéristique sensiblement similaire à celle de la cellule identifiée. Si elle ne trouve pas une telle cellule, alors elle peut par exemple envoyer une demande à l'outil d'optimisation (par exemple un RNO®).

La partie du dispositif D, qui est implantée dans l'outil d'optimisation, recherche alors dans des moyens de mémorisation centraux une cellule stable présentant une caractéristique sensiblement similaire à celle de la cellule identifiée. Dans l'affirmative, elle envoie à la partie du dispositif D, qui est implantée dans le contrôleur de réseau radio concerné, l'ensemble de valeur(s) qui définit la caractéristique de la cellule stable déterminée.

La partie du dispositif D, qui est implantée dans le contrôleur de réseau radio concerné, envoie alors une demande d'autorisation d'adaptation à l'OMC. Si l'OMC autorise l'adaptation, ou si une temporisation a expiré, la partie du dispositif D, qui est implantée dans le contrôleur de réseau radio concerné, envoie l'ensemble de valeur(s) du paramètre à adapter à la cellule.

La partie du dispositif D, qui est implantée dans la cellule concernée, ordonne alors l'adaptation du paramètre (en signalant cette adaptation au contrôleur de réseau radio et à l'OMC). Puis, après expiration d'une temporisation de durée choisie, elle peut contrôler l'influence de l'adaptation de paramètre sur le fonctionnement de la cellule et plus précisément sur le problème initialement détecté. En cas de détection d'une amélioration, cette même partie du dispositif D peut entériner l'adaptation, sinon elle peut réinstaurer l'ancien ensemble de valeur(s) et le signaler au contrôleur de réseau radio et à l'OMC.

On notera que dans cet exemple de réalisation la partie du dispositif D, qui est implantée dans l'OMC, peut par exemple gérer le dialogue avec l'opérateur, configurer toutes les autres parties du dispositif D, gérer l'historique des actions des différentes parties du dispositif D et contrôler l'efficacité de ces actions.

On notera également, comme évoqué précédemment, qu'il est avantageux que le(s) dispositif(s) D soi(en)t paramétrable(s). Il est en effet préférable, pour des raisons de sécurité, que le(s) dispositif(s) D ne puisse(nt) pas agir sur tout ou partie d'un réseau en permanence et sans contrôle. Le paramétrage est donc destiné à limiter l'utilisation du (des) dispositif(s) afin qu'il(s) n'agisse(nt) de façon autonome qu'en des endroits où il(s) ne peu(ven)t pas faire de dégâts importants. La paramétrisation peut ainsi contraindre le(s) dispositif(s) à être au moins partiellement débrayable et/ou à agir de façon limitée dans le temps et/ou à agir de façon limitée dans certaines au moins des parties du réseau RC et/ou à effectuer des fonctions choisies et/ou à n'accepter que certains états choisis.

On notera également, comme évoqué précédemment, qu'il est préférable que le(s) dispositif(s) D soi(en)t aussi contrôlé(s) que possible. Il est en effet préférable, pour des raisons de sécurité, que le(s) dispositif(s) D puisse(nt) être débrayé(s) (unitairement ou ensemble) et que les actions qu'il(s) effectue(nt) soient validées par un opérateur immédiatement ou a posteriori.

Grâce à l'invention, il est désormais possible d'automatiser au moins partiellement l'optimisation d'une partie au moins d'un réseau de communication en appliquant, lorsque cela s'avère possible, des ensembles de valeur(s) de paramètres de caractéristique identiques à des objets sensiblement similaires. Ainsi, le nombre d'interventions d'optimisation que le gestionnaire du réseau et/ou l'outil d'optimisation du réseau (comme par exemple RNO® ou NPO®) a (ont) à faire est notablement réduit. En outre cela permet de réduire notablement les temps de réaction en présence d'un dysfonctionnement ou d'un problème de réseau.

L'invention ne se limite pas aux modes de réalisation de dispositif d'optimisation et d'équipement de gestion de réseau décrits ci-avant, seulement à titre d'exemple, mais elle englobe toutes les variantes que pourra envisager l'homme de l'art dans le cadre des revendications ci-après.

## Revendications

1. Dispositif (D) d'optimisation du fonctionnement d'une partie au moins d'un réseau de communication (RC) comprenant des objets disposant d'une caractéristique définie par au moins un paramètre lui-même défini par un ensemble d'au moins une valeur, **caractérisé en ce qu'**il comprend des moyens de traitement (MT) chargés, en cas d'identification d'un objet dudit réseau (RC) dont la caractéristique est définie par au moins un paramétre devant être adapté,
i) de déterminer dans des moyens de mémorisation (MM) au moins un objet stable ayant une caractéristique sensiblement similaire à celle de l'objet identifié et définie par au moins un paramètre identique audit paramètre à adapter et défini par un ensemble de valeur(s),
ii) d'ordonner l'application de cet ensemble de valeur(s) audit paramètre à adapter dans ledit objet identifié, et
iii) d'analyser pendant une durée choisie l'influence de l'adaptation dudit paramètre sur le fonctionnement dudit objet identifié, afin de ne remplacer dans lesdits moyens de mémorisation (MM) l'ancienne définition de la caractéristique dudit objet identifié par la définition de caractéristique adaptée qu'en cas d'amélioration de son fonctionnement induite par l'adaptation dudit paramètre.

2. Dispositif selon la revendication 1, **caractérisé en ce qu'**il comprend des moyens d'identification (MI) agencés pour analyser le fonctionnement dudit réseau de manière à identifier des objets dont la caractéristique est définie par au moins un paramètre à adapter.

3. Dispositif selon la revendication 2, **caractérisé en ce que** lesdits moyens d'identification (MI) sont agencés pour identifier lesdits objets en fonction d'alarmes et/ou d'indicateurs de qualité de service et/ou d'informations représentatives d'instabilités d'objets délivré(e)s par des d'informations représentatives d'instabilités d'objets delivré(e)s par des équipements dudit réseau (RC).

4. Dispositif selon l'une des revendications 1 à 3, **caractérisé en ce qu'**il comprend lesdits moyens de mémorisation (MM).

5. Dispositif 1 à 4, **caractérisé en ce que** lesdits moyens de traitement (MT) sont agencés pour déterminer dans lesdits moyens de mémorisation (MM) des objets stables dont les caractéristiques sont définies par des paramètres appartenant à une liste choisie de paramètres et appartenant à une liste choisie d'objets et/ou ayant un type appartenant à une liste choisie de types et/ou ayant au moins une caractéristique physique ou géographique appartenant à une liste choisie de caractéristiques.

6. Dispositif selon l'une des revendications 1 à 5, **caractérisé en ce que** lesdits moyens de traitement (MT) sont agencés pour déterminer des caractéristiques adaptées pour des objets identifiés requérant une adaptation de caractéristique depuis plus d'une durée choisie.

7. Dispositif selon l'une des revendications 1 à 6, **caractérisé en ce que** lesdits moyens de traitement (MT) sont agencés pour requérir une autorisation d'un gestionnaire dudit réseau (RC) avant d'appliquer un ensemble de valeur(s) à un paramètre de caractéristique d'un objet identifié.

8. Dispositif selon l'une des revendications 1 à 7, **caractérisé en ce que** lesdits moyens de traitement (MT) sont agencés pour requérir une autorisation d'un gestionnaire dudit réseau (RC) avant de remplacer dans lesdits moyens de mémorisation (MM) une ancienne définition de caractéristique d'un objet identifié par une définition de caractéristique adaptée ayant induit une amélioration de son fonctionnement.

9. Dispositif selon l'une des revendications 7 et 8, **caractérisé en ce que** lesdits moyens de traitement (MT) sont agencés, en l'absence de réception d'une réponse pendant une durée choisie démarrée consécutivement à une requête d'autorisation, pour appliquer ledit ensemble de valeur(s) ou pour remplacer ladite ancienne définition de caractéristique.

10. Dispositif selon l'une des revendications 1 à 9, **caractérisé en ce que** lesdits moyens de traitement (MT) sont agencés pour signaler certaines au moins des actions effectuées à au moins un équipement ou élément de réseau en vue d'un contrôle et/ou d'une analyse d'action.

11. Dispositif selon l'une des revendications 1 à 10, **caractérisé en ce qu'**il est au moins en partie paramétrable de manière à être au moins partiellement débrayable et/ou à agir de façon limitée dans le temps et/ou à agir de façon limitée dans certaines au moins des parties dudit réseau (RC) et/ou à effectuer des fonctions choisies et/ou à n'accepter que certains états choisis.

12. Dispositif selon l'une des revendications 1 à 11, **caractérisé en ce que** lesdits moyens de traitement (MT) sont agencés pour stocker dans des moyens de mémorisation auxiliaires (MMA) chaque adaptation de paramètre de caractéristique d'un objet identifié, et **en ce qu'**il comprend des moyens d'analyse (MA) agencés pour analyser lesdites adaptations stockées dans les moyens de mémorisation auxiliaires (MMA) de manière à effectuer des corrélations de problèmes.

13. Equipement (EG) de gestion de réseau de communication (RC), **caractérisé en ce qu'**il comprend un dispositif d'optimisation (D) selon l'une des revendications précédentes.

## Claims

1. A device (D) for optimizing the operation of at least part of a communication network (RC) comprising objects having a characteristic defined by at least one parameter itself defined by a set of at least one value, **characterized in that** it comprises processing means (MT) tasked, when an object of said network (RC) whose characteristic is defined by at least one parameter needing adaptation is identified,
i) with determining within memorization means (MM) at least one stable object having a characteristic roughly similar to that of the identified object and defined by at least one parameter identical to said parameter to be adapted and defined by a set of value(s),
ii) with ordering that this set of value(s) be applied to said parameter needing adaptation within said identified object, and
iii) with analyzing, for a chosen duration, the influence of the adaptation of said parameter on the operation of said identified object, so as to only replace within said memorization means (MM) the former characteristic definition of said identified object with the adapted definition of the characteristic in cases when its operation is improved by adapting said parameter.

2. A device according to claim 1, **characterized in that** it comprises identification means (MI) configured to analyze the operation of said network so as to identity objects whose characteristics are defined by at least one parameter to be adapted.

3. A device according to claim 2, **characterized in that** said identification means (MI) are operative to identify said objects as a function of quality of alarms and/or quality of service indicators and/or information representative of instabilities in objects delivered by equipment of said network (RC).

4. A device according to one of the claims 1 to 3, **characterized in that** it comprises said memorization means (MM).

5. A device according to one of the claims 1 to 4, **characterized in that** said processing means (MT) are operative to determine within said memorization means (MM) stable objects whose characteristics are defined by parameters belonging to a chosen list of parameters and belonging to a chosen list of objects and/or having a type belonging to a chosen list of types and/or having at least one physical or geographic characteristic belonging to a chosen list of characteristics.

6. A device according to one of the claims 1 to 5, **characterized in that** said processing means (MT) are operative to determine appropriate characteristics for identified objects requiring a characteristic adaptation for more than a chosen duration.

7. A device according to one of the claims 1 to 6, **characterized in that** said processing means (MT) are operative to require an authorization from a manager of said network (RC) before applying a set of value(s) to a characteristic parameter of an identified object.

8. A device according to one of the claims 1 to 7, **characterized in that** said processing means (MT) are operative to require an authorization from a manager of said network (RC) before replacing, within said memorization means (MM), a former characteristic definition of said identified object with the adapted characteristic definition that led to an improvement in its operation.

9. A device according to one of the claims 7 and 8, **characterized in that** said processing means (MT) are operative, in the absence of receiving a response for a chosen duration that began subsequent to a permission request, to apply said set of value(s) or to replace said former characteristic definition.

10. A device according to one of the claims 1 to 9, **characterized in that** said processing means (MT) are operative to report at least some of the performed actions to at least one network element or equipment in view of checking and/or analyzing an action.

11. A device according to one of the claims 1 to 10, **characterized in that** it is at least partially configurable so as to be at least partially detachable and/or to act in a limited fashion over time and/or to act in a limited fashion in at least some of the parts of said network (RC) and/or to perform chosen functions and/or to accept only some chosen states.

12. A device according to one of the claims 1 to 11, **characterized in that** said processing means (MT) are operative to store, within auxiliary memorization means (MMA), each characteristic parameter adaptation of an identified object, and **in that** it comprises analysis means (MA) for analyzing said adaptations stored in the auxiliary memorization means (MMA) so as to carry out correlations of problems.

13. A communication network (RC) network management equipment (EG), **characterized in that** it comprises an analysis device (D) according to one of the preceding claims.

## Patentansprüche

1. Vorrichtung zur Optimierung des Betriebs zumindest eines Teils eines Kommunikationsnetzwerks (RC) mit Objekten, welche über eine durch mindestens einen Parameter definierte Eigenschaft verfügen, wobei der besagte Parameter selbst von einer Gruppe bestehend aus mindestens einem Wertes definiert wird, **dadurch gekennzeichnet, dass** sie Verarbeitungsmittel (MT) umfasst, die im Fall der Identifikation eines Objektes des besagten Netzwerks (RC), dessen Eigenschaft durch mindestens einen anzupassenden Parameter definiert wird, für die folgenden Aufgaben bestimmt sind:
i) Bestimmen, in Speicherungsmitteln (MM), mindestens eines stabilen Objektes, welches eine Eigenschaft aufweist, die im Wesentlichen mit der Eigenschaft des identifizierten Objektes vergleichbar ist und durch mindestens einen Parameter, der mit dem anzupassenden und durch einen Wert oder eine Gruppe von Werten definierten Parameter identisch ist, definiert wird,
ii) Veranlassen, dass dieser Wert oder diese Gruppe von Werten auf den in dem besagten identifizierten Objekt anzupassenden Parameter angewendet wird, und
iii) Analysieren, während einer ausgewählten Dauer, des Einflusses der Anpassung des besagten Parameters auf den Betrieb des besagten identifizierten Objektes, um in den besagten Speicherungsmitteln (MM) die alte Definition der Eigenschaft des besagten identifizierten Objektes nur im Fall einer durch die Anpassung des besagten Parameters induzierten Verbesserung durch die Definition der geeigneten Eigenschaft zu ersetzen.

2. Vorrichtung nach Anspruch 1, **dadurch gekennzeichnet, dass** es Identifikationsmittel (MI) umfasst, die für die Analyse des Betriebs des besagten Netzwerks ausgelegt sind, um die Objekte zu identifizieren, deren Eigenschaft durch mindestens einen anzupassenden Parameter definiert wird.

3. Vorrichtung nach Anspruch 2, **dadurch gekennzeichnet dass** die besagten Identifikationsmittel (MI) dazu ausgelegt sind, die besagten Objekte in Abhängigkeit von Alarmen und/oder Dienstgüteindikatoren und/oder Informationen, die für von den Einrichtungen des besagten Netzwerks (RC) gelieferte Objektinstabilitäten repräsentativ sind, zu identifizieren.

4. Vorrichtung nach einem der Ansprüche 1 bis 3, **dadurch gekennzeichnet, dass** sie die besagten Speicherungsmittel (MM) umfasst.

5. Vorrichtung nach einem der Ansprüche 1 bis 4, **dadurch gekennzeichnet, dass** die besagten Verarbeitungsmittel (MT) dazu ausgelegt sind, in den besagten Speicherungsmitteln (MM) stabile Objekte zu bestimmen, deren Eigenschaften durch Parameter, die zu einer ausgewählten Liste von Parametern und zu einer ausgewählten Liste von Objekten gehören und/oder eines Typs, welcher einer ausgewählten Liste von Typen und/oder mit mindestens einer physischen oder geografischen Eigenschaft, welche einer ausgewählten Liste von Eigenschaften angehört, definiert werden.

6. Vorrichtung nach einem der Ansprüche 1 bis 5, **dadurch gekennzeichnet, dass** die besagten Verarbeitungsmittel (MT) dazu ausgelegt sind, für die identifizierten Objekte, die seit länger als einer ausgewählten Dauer eine Eigenschaftsanpassung erfordern, eine geeignete Eigenschaft zu bestimmen.

7. Vorrichtung nach einem der Ansprüche 1 bis 6, **dadurch gekennzeichnet, dass** die besagten Verarbeitungsmittel (MT) dazu ausgelegt sind, vor der Anwendung eines Wertes oder einer Gruppe von Werten auf einen Parameter einer Eigenschaft eines identifizierten Objektes eine Genehmigung eines Verwalters des besagten Netzwerks (RC) anzufordern.

8. Vorrichtung nach einem der Ansprüche 1 bis 7, **dadurch gekennzeichnet, dass** die besagten Verarbeitungsmittel (MT) dazu ausgelegt sind, vor dem Ersetzen, in den besagten Speicherungsmitteln (MM), einer alten Definition einer Eigenschaft eines identifizierten Objektes durch eine geeignete Definition der Eigenschaft, welche eine Verbesserung des Betriebs induziert hat, eine Genehmigung eines Verwalters des besagten Netzwerks (RC) anzufordern.

9. Verfahren nach einem der Ansprüche 7 und 8, **dadurch gekennzeichnet, dass** die besagten Verarbeitungsmittel (MT) dazu ausgelegt sind, in Abwesenheit des Empfangs einer Reaktion während einer ausgewählten Dauer, beginnend im Anschluss an eine Genehmigunqsanforderung, den besagten Wert oder die besagte Gruppe von Werten anzuwenden oder die besagte alte Definition der Eigenschaft zu ersetzen.

10. Vorrichtung nach einem der Ansprüche 1 bis 9, **dadurch gekennzeichnet, dass** die besagten Verarbeitungsmittel (MT) dazu ausgelegt sind, zumindest bestimmte der ausgeführten Aktionen auf mindestens eine Einrichtung oder ein Element des Netzwerks in Hinsicht auf eine Kontrolle und/oder Analyse der Aktion zu signalisieren.

11. Vorrichtung nach einem der Ansprüche 1 bis 10, **dadurch gekennzeichnet, dass** sie zumindest teilweise parametrierbar ist, so dass sie zumindest teilweise ausschaltbar ist und/oder in begrenzter Weise in der Zeit agiert und/oder in begrenzter Weise in zumindest bestimmten Teilen des besagten Netzwerks (RC) agiert und/oder ausgewählte Funktionen ausführt und/oder nur bestimme ausgewählte Zustände akzeptiert.

12. Vorrichtung nach einem der Ansprüche 1 bis 11, **dadurch gekennzeichnet, dass** die besagten Verarbeitungsmittel (MT) dazu ausgelegt sind, jede Parameteranpassung der Eigenschaft eines identifizierten Objektes in Hilfsspeicherungsmitteln (MMA) zu speichern, dass sie Analysemittel (MA) umfasst, die dazu ausgelegt sind, die besagten in den Hilfsspeicherungsmitteln (MMA) gespeicherten Anpassungen zu analysieren, um eine Korrelation von Problemen zu ermöglichen.

13. Einrichtung (EG) für die Verwaltung eines Kommunikationsnetzwerks (RC), **dadurch gekennzeichnet, dass** sie eine Optimierungsvorrichtung (D) gemäß einem der vorstehenden Ansprüche umfasst.
